# EUROPÄISCHE PATENTSCHRIFT

(11) **EP 3 191 756 B1**
(45) Veröffentlichungstag und Bekanntmachung des Hinweises auf die Patenterteilung: **30.10.2019**
(21) Anmeldenummer: 15759379.9
(22) Anmeldetag: 02.09.2015
(51) Int. Cl.: B32B 27/06, B32B 27/32, B32B 7/12, B32B 1/08, F16L 11/12

(54) **FLEXIBLES KUNSTSTOFFROHR SOWIE DIESES UMFASSENDES FLÄCHENTEMPERIERUNGSELEMENT**
FLEXIBLE PLASTIC TUBE AND SURFACE TEMPERATURE CONTROLLING ELEMENT SURROUNDING SAID PLASTIC TUBE
TUYAU EN MATIÈRE PLASTIQUE SOUPLE ET ÉLÉMENT D'ÉQUILIBRAGE DE TEMPÉRATURE EN SURFACE COMPORTANT CELUI-CI

(30) Priorität: 12.09.2014 DE 202014104324 U
(43) Veröffentlichungstag der Anmeldung: 19.07.2017
(73) Patentinhaber: REHAU AG + Co, 95111 Rehau (DE)
(72) Erfinder: KOCH, Klaus, 90513 Zirndorf (DE); BURKHARDT, Oliver, 91080 Uttenberg (DE); VOHLER, Tobias, 92318 Neumarkt (DE)
(86) Internationale Anmeldenummer: PCT/EP2015/001768
(87) Internationale Veröffentlichungsnummer: WO 2016/037691

(56) Entgegenhaltungen:
- DE-A1- 2 534 582
- DE-U1-202010 009 133
- DE-U1-202010 011 520

## Beschreibung

Die vorliegende Erfindung betrifft ein Flächentemperierungssystem gemäß Anspruch 1.

In der DE 25 34 582 A1 ist eine Verbindung zwischen zwei koaxialen Rohren beschrieben, wobei die beiden zu verbindenden Rohrenden je eine äußere Krone zur Bildung einer Klettverbindung aufweisen und die äußeren Kronen unter Bildung der Rohrverbindung durch ein Umwickelband miteinander verbunden sind.

Flexible Kunststoffrohre zur Verwendung in einem Flächentemperierungssystem und entsprechende Flächentemperierungssysteme sind aus dem Stand der Technik bekannt. Diese werden zum Heizen und Kühlen von Räumen eingesetzt, wobei in Fußböden, Wänden oder Decken verlegte, von einem Wärmeträgermedium durchströmte Rohrleitungen in einer Estrichschicht in Fußböden, Wänden oder Decken eingegossen sind. Vor dem Vergießen mit Estrich sind die Rohrleitungen üblicherweise durch geeignete Schienen oder Halter auf Trägern gehaltert. Zur einfacheren und schnelleren Verlegung ist es bekannt, die Rohrleitungen mittels einer Klettverbindung auf den Trägern zu festzulegen. Beispielsweise beschreibt die DE 20 2010 009 133 U1 ein Flächentemperierungssystem mit einer Klett-Faserplatte aus einem formstabilen flächigen Träger, auf den eine gewebeverstärkte Folie aufgebracht ist, die ein erstes Element einer Klettvorrichtung bildet, und einem flexiblen Rohr, das zumindest teilweise mit einem zweiten Element der Klettvorrichtung ummantelt ist. Nachteilig an dem in der DE 20 2010 009 133 U1 beschriebenen Flächentemperierungssystem wird gesehen, dass es zwischen dem starren formstabilen flächigen Träger und dem Rohr nur zu einem punktuellen Kontakt im Randbereich des Rohres und damit nur zu einer schwach ausgebildeten Klettverbindung kommt, was zu Montageungenauigkeit oder Montageproblemen aufgrund nur mangelhaft fixierter Rohre führen kann.

Um dies zu vermeiden, wird in der DE 20 2010 009 133 U1 selbst vorgeschlagen, zwischen dem starren formstabilen flächigen Träger und der gewebeverstärkten Folie eine elastische Beschichtung vorzusehen, durch die Auflagefläche des Rohres auf der gewebeverstärkten Folie vergrößert und dadurch die Klettverbindung verstärkt werden soll. Ein derartiger komplexer Aufbau der Trägereinheit für das Rohr ist jedoch kostenintensiv.

Alternativ dazu schlägt die DE 20 2014 101 286 U1 vor, den formstabilen flächigen Träger als eine Tiefziehfolie auszubilden, die parallele, in einem Abstand zueinander verlaufende Rippen aufweist, die die zumindest teilweise Aufnahme des Rohres ermöglichen. Nachteilig an dem in der die DE 20 2014 101 286 U1 beschriebenen Flächentemperierungssystem wird gesehen, dass dieses unflexibel hinsichtlich der Verlegerichtung des Rohres ist, da die Rohre nur in den Rippen verlegt werden können. In den Umlenkbereichen muss das Rohr zwangsläufig außerhalb der Rippen verlaufen, so dass es insbesondere in diesen Bereich zu einer nicht hinreichenden Fixierung des Rohres kommen kann, was zu einem Aufschwimmen des Rohres führen kann.

An dieser Stelle setzt die vorliegende Erfindung ein, deren Aufgabe darin liegt, ein Flächentemperierungssystem zur Verfügung zu stellen, das die Nachteile des Stands der Technik überwindet. Insbesondere soll das erfindungsgemäße Flächentemperierungssystem eine sichere Verbindung zwischen Rohr und Rohrträger gewährleisten und die Verwendung eines einfachen und kostengünstigen Rohrträgers ermöglichen.

Diese und andere Aufgaben werden durch ein Flächentemperierungssystem mit den Merkmalen des Anspruchs 1 gelöst. Bevorzugte Ausführungsformen der Erfindung sind in den davon jeweils abhängigen Ansprüchen beschrieben.

Gemäß der vorliegenden Erfindung wurde erkannt, dass eine ausreichend starke Klettverbindung zwischen einem flexiblen Kunststoffrohr und einer Trägerfolie dann gewährleistet ist, wenn zwischen einer das Lumen umgebenden Schicht des Kunststoffrohrs und einer zweiten, die Außenseite des Kunststoffrohres bildenden Schicht, die die erste Schicht zumindest teilweise ummantelt und ein erstes Element einer Klettverbindung umfasst, eine flexible, elastische Ummantelung angeordnet ist. Beim Verlegen des flexiblen Kunststoffrohrs auf dem mit der Trägerfolie versehenen formstabilen flächigen Träger passt sich die flexible, elastische Ummantelung aufgrund ihrer Elastitzität an die Oberfläche der Trägerfolie an, wenn auf das flexible Kunststoffrohr von außen Druck ausgeübt wird, beispielsweise indem der Verleger mit dem Fuß auf das flexible Kunststoffrohr steigt oder mit der Hand darauf drückt oder darüber streicht. Dadurch wird die Kontaktfläche zwischen dem flexiblen Kunststoffrohr und der Trägerfolie vergrößert, was zu einer stärker ausgebildeten Klettverbindung führt. Nach Wegfall des Drucks auf das flexible Kunststoffrohr bleibt diese Kontaktfläche aufgrund der Klettverbindung im Wesentlichen unverändert. Darüber hinaus kann das flexible Kunststoffrohr beliebig auf dem mit der Trägerfolie versehenen formstabilen flächigen Träger ohne festgelegte Verlegerichtung verlegt werden. Zur Korrektur der Verlegung kann die Klettverbindung gelöst und das Rohr in der gewünschten Anordnung verlegt werden. Dies erlaubt so eine flexible Rohrverlegung, die sich an unterschiedliche Raumgeometrien anpassen lässt. Ein Aufschwimmen des flexiblen Kunststoffrohrs im frisch verlegten Estrich ist weitestgehend ausgeschlossen. Letztlich muss gemäß der vorliegenden Erfindung lediglich das Rohr mit einer flexiblen, elastischen Ummantelung versehen werden, was zu einer Kostensenkung des erfindungsgemäßen Flächentemperierungssystems führt.

Wie er hierin verwendet wird, bedeutet der Begriff "Kunststoffrohr" ein Vollkunststoffrohr oder ein Metall-Kunststoff-Verbundrohr. In Bezug auf das erfindungsgemäß verwendete Kunststoffrohr wird der Begriff "flexibel" hierin so verwendet, dass das erfindungsgemäß verwendete flexible Kunststoffrohr Biegeradien ermöglicht, die zur Verlegung eines Rohres für ein Flächentemperierungssystem erforderlich sind.

Hinsichtlich des flexiblen Kunststoffrohrs ist es bevorzugt, wenn die zweite Schicht spiralförmig oder doppelspiralförmig an der Außenseite des flexiblen Kunststoffrohrs angeordnet ist. Bei geringem Materialaufwand sorgt dies für eine dennoch hohe Häufigkeit der Kontaktstellen zwischen dem flexiblen Kunststoffrohr und der Trägerfolie. Dabei hat es sich als materialeinsparend und damit kostengünstig erwiesen, wenn die flexible, elastische Ummantelung die erste Schicht teilweise ummantelt. Eine besonders effektive Variante hinsichtlich Materialaufwand für die flexible elastische Schicht und hoher Kontaktfläche zwischen dem flexiblen Kunststoffrohr und der Trägerfolie liegt in diesem Zusammenhang insbesondere dann vor, wenn die flexible, elastische Ummantelung an der der ersten Schicht zugewandten Seite der zweiten Schicht angeordnet ist und dem Verlauf der zweiten Schicht an der Außenseite des flexiblen Kunststoffrohrs folgt.

Ebenso ist es erfindungsgemäß bevorzugt, dass die flexible, elastische Ummantelung die erste Schicht des erfindungsgemäßen flexiblen Kunststoffrohrs vollständig ummantelt. Dazu kann die flexible, elastische Ummantelung im Rahmen einer Coextrusion unmittelbar oder unter Einsatz einer Haftvermittlerschicht auf die erste Schicht aufgebracht werden.

Eine bevorzugte einfache Verbindung zwischen der flexiblen, elastischen Ummantelung sowie der ersten Schicht und/oder der zweiten Schicht erfolgt über eine Klebstoffschicht.

Die flexible, elastische Ummantelung ist aus einem flexiblen Material, wie einem geschäumten Kunststoff (z.B. ein geschäumtes Polyethylen oder Polyurethan) hergestellt. Die flexible, elastische Ummantelung gibt bei Einwirkung eines äußeren Drucks aufgrund ihrer Flexibilität nach und ermöglicht auf diese Weise beim Aufdrücken des Kunststoffrohres auf die Trägerfolie die Ausbildung einer vergrößerten Auflagefläche und somit einer stärkeren Klettverbindung zwischen Kunststoffrohr und Trägerfolie.

Bevorzugt handelt es sich bei dem polymeren Material der ersten Schicht des flexiblen Kunststoffrohrs um vernetztes Polyethylen (PE-X) oder PE-RT. Wie er hierin verwendet wird, bedeutet der Begriff "PE-RT" ein Polyethylen mit erhöhter Temperaturbeständigkeit gemäß ISO 24033. Eine erste Schicht aus PE-X ist aufgrund der thermischen und mechanischen Eigenschaften (wie Schlagzähigkeit, Knickfestigkeit, Punktlastbeständigkeit) bevorzugt. Wie hierin verwendet wird, bedeutet der Begriff "PE-X" vernetztes Polyethylen, wobei Peroxid-vernetztes Polyethylen (PE-Xa), Silan-vernetztes Polyethylen (PE-Xb), Elektronenstrahl-vernetztes Polyethylen (PE-Xc) sowie azovernetztes Polyethylen (PE-Xd) umfasst sind. Gemäß der vorliegenden Erfindung wird Peroxid-vernetztes Polyethylen (PE-Xa) als bevorzugtes polymeres Material der ersten Schicht eingesetzt. Gemäß der vorliegenden Erfindung erfolgt die Vernetzung zum vernetzten Polyethylen vorzugsweise wie in der DE 102 51 152 B4 beschrieben.

Darüber hinaus kann das polymere Material der ersten Schicht weiter einen Haftvermittler (vorzugsweise ein funktionalisiertes Polyolefinen, insbesondere ein Maleinsäureanhydridgepfropftes LLDPE (lineares Polyethylen geringerer Dichte)) und/oder eine Diffusionssperrschicht, insbesondere aus Polyvinylakohol (PVA) oder Ethylen-Vinylalkohol-Copolymer (EVOH) umfassen.

Hinsichtlich des erfindungsgemäßen Flächentemperierungssystems ist es bevorzugt, wenn der formstabile, flächige Träger an seiner der Trägerfolie abgewandten Seite mit einer Abdeckfolie verbunden ist, die bevorzugt wasserabweisend ausgeführt sein kann. Dadurch kann effektiv verhindert werden, dass Leckagewasser oder Feuchtigkeit in den Boden des Raums gelangt. Die Trägerfolie ist mit dem formstabilen flächigen Träger vorzugsweise mittels eines Klebstoffes oder in anderer Weise verbunden bevorzugt unlösbar befestigt.

Die Trägerfolie ist bevorzugt flächig mit dem zweiten Element der Klettverbindung versehen, vorzugsweise ist einseitig die gesamte Fläche der Trägerfolie mit dem zweiten Element der Klettverbindung versehen. Die so gebildete flächige Klettverbindung ermöglicht eine Rohrverlegung auf der gesamten Fläche der Trägerfolie in einem beliebigen Verlegemuster.

Gemäß einer Ausführungsform der vorliegenden Erfindung wird ein Element der Klettverbindung durch Haken, Schlingen und/oder Fasern gebildet, die in ein Vlies, ein Gewirke, ein Veloursgewebe, ein Plüsch-, Frottee- oder sonstiges textiles Flächengebilde oder dergleichen des anderen Elements der Klettverbindung lösbar eingreifen können. Die Klettverbindung gewährleistet so eine lösbare Verbindung zwischen der Trägerfolie und dem flexiblen Kunststoffrohr, wodurch das flexible Kunststoffrohr auf der Trägerfolie reversibel festgelegt wird. Dabei ist es bevorzugt, wenn das erste Element der Klettverbindung die Haken, Schlingen und/oder Fasern aufweist, während das zweite Element der Klettverbindung durch das Vlies, das Gewirke, ein Veloursgewebe oder ein Plüsch-, Frottee- oder sonstiges textiles Flächengebilde gebildet wird. Umgekehrt ist auch möglich, dass das erste Element der Klettverbindung durch das Vlies, das Gewirke, das Veloursgewebe, das Plüsch-, Frottee- oder sonstiges textiles Flächengebilde gebildet wird, während das zweite Element der Klettverbindung die Haken, Schlingen und/oder Fasern umfasst.

Gemäß der vorliegenden Erfindung ist der formstabile flächige Träger vorzugsweise so stabil ausgeführt, dass er für die Verlegung des flexiblen Kunststoffrohrs als Bestandteil einer Fußbodenheizung geeignet ist. Dabei haben sich formstabile flächige Träger aus unterschiedlichen Materialien wie Holz, Kunststoffen, Styropor, Polyurethan oder geeigneten Verbundstoffen als geeignet erwiesen.

Vorzugsweise sind die Ränder des formstabilen flächigen Trägers mit Verbindungselementen versehen, so dass diese Verbindungselemente eine Verknüpfung zwischen zwei formstabilen flächigen Trägern ermöglichen. Insbesondere handelt es sich bei den Verbindungselementen um miteinander kooperierende Nut-und-Feder-Elemente.

Im Folgenden soll die vorliegende Erfindung unter Bezugnahme auf die in den Figuren dargestellten Ausführungsformen im Detail erläutert werden. Insoweit sich Teile oder Bauelemente in ihrer Funktion entsprechen, wird deren Beschreibung nicht in jeder der folgenden Figuren wiederholt. Es zeigen:

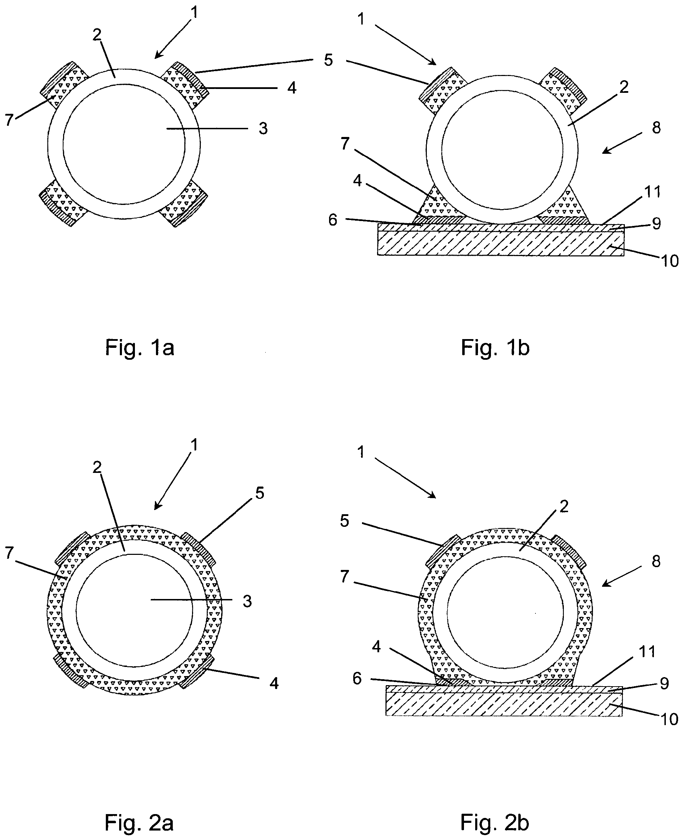

- Fig. 1a: eine Querschnittsdarstellung eines flexiblen Kunststoffrohres;
- Fig. 1b: eine Querschnittsdarstellung eines Flächentemperierungssystems mit dem in
- Fig. 1a: dargestellten flexiblen Kunststoffrohr;
- Fig. 2a: eine Querschnittsdarstellung eines weiteren flexiblen Kunststoffrohres; und
- Fig. 2b: eine Querschnittsdarstellung eines Flächentemperierungssystems mit dem in
- Fig. 2a: dargestellten flexiblen Kunststoffrohr.

In Fig. 1a ist eine Ausführungsform eines flexiblen Kunststoffrohres 1 in einer Querschnittsdarstellung gezeigt. Das flexible Kunststoffrohr 1 umfasst eine erste Schicht 2 aus polymerem Material, die ein Lumen 3 zu Führung eines Wärmeträgermediums umgibt. In der in Fig.1 a dargestellten Ausführungsform der vorliegenden Erfindung ist die erste Schicht 2 aus Peroxid-vernetztem Polyethylen (PE-Xa), um das herum in der angegeben Reihenfolge eine Haftvermittlerschicht und eine Diffusionssperrschicht angeordnet sind.

Bevorzugt ist die erste Schicht 2 sauerstoffdicht gemäß DIN 4726. Die erste Schicht 2 wird vorzugsweise durch Coextrusion hergestellt.

Die Außenseite des flexiblen Kunststoffrohres 1 bildet eine zweite Schicht 4. In der in Fig. 1a dargestellten Ausführungsformform des flexiblen Kunststoffrohres 1 ist die zweite Schicht 4 in Form von Bändern ausgebildet, die in Form von im Wesentlichen parallel zueinander verlaufenden Spiralen um die erste Schicht 2 angeordnet sind. Damit ist die erste Schicht 2 von der zweiten Schicht 4 teilweise ummantelt.

An der der ersten Schicht 2 abgewandten Seite der zweiten Schicht 4 befinden sich unregelmäßig über ihre gesamte Oberfläche verteilt Schlingen, die ein erstes Element 5 einer Klettverbindung 6 (vgl. Fig. 1b) bilden. Alternativ oder zusätzlich dazu das erste Element 5 der Klettverbindung 6 auch durch Haken, Fasern oder ähnliches umfassen. Ebenso kann das erste Element 5 der Klettverbindung 6 auch als Gewirke, Vlies, Veloursgewebe, Plüsch-, Frottee- oder sonstiges textiles Flächengebilde ausgebildet sein.

An der den Schlingen abgewandten Seite der zweiten Schicht 4 ist über die gesamte Fläche mittels einer Klebstoffverbindung eine weitere Schicht aus geschäumtem Polyethylen befestigt, die eine flexible elastische Ummantelung 7 darstellt. Die flexible elastische Ummantelung 7 ummantelt die erste Schicht 2 somit ebenfalls in der Form von im Wesentlichen parallel zueinander verlaufender Spiralen, deren Verlauf jeweils dem Verlauf der Spiralen der zweiten Schicht 4 entspricht. Die flexible elastische Ummantelung 7 ist wiederum über eine Klebstoffverbindung mit der ersten Schicht 2 verbunden.

In Fig. 1b ist eine Ausführungsform eines Flächentemperierungssystems 8 gemäß der vorliegenden Erfindung mit dem in Fig. 1a dargestellten flexiblen Kunststoffrohr 1 in einer Querschnittsdarstellung gezeigt. Das flexible Kunststoffrohr 1 ist darin auf eine Trägerfolie 9 aufgebracht, die über eine Klebstoffschicht flächig auf einen formstabilen flächigen Träger 10 aufgebracht ist.

Die dem formstabilen flächigen Träger 10 abgewandte Seite der Trägerfolie 9 ist dabei als Vlies ausgebildet, das ein zweites Element 11 einer Klettverbindung 6 bildet. Alternativ dazu kann das zweite Element 11 der Klettverbindung 6 auch als Gewirke, Veloursgewebe, Plüsch-, Frottee- oder sonstiges textiles Flächengebilde ausgebildet sein. Ebenso kann das zweite Element 11 der Klettverbindung 6 auch durch Haken, Schlingen und/oder Fasern gebildet sein, während das erste Element 5 als Vlies, Gewirke, Veloursgewebe oder dergleichen ausgestaltet ist. Da die Trägerfolie 9 vollflächig mit dem Vlies versehen ist, kann das flexible Kunststoffrohr 1 an beliebigen Stellen der Trägerfolie 9 lösbar befestigt werden.

Der formstabile flächige Träger 10 in der in Fig. 1b gezeigten Ausführungsform vorzugsweise so stabil ausgeführt, dass er für die Verlegung des flexiblen Kunststoffrohrs 1 als Bestandteil eines als Fußbodenheizung ausgebildeten erfindungsgemäßen Flächentemperierungssystems 8 geeignet ist. Dabei haben sich formstabile flächige Träger 10 aus unterschiedlichen Materialien wie Holz, Kunststoffen, Styropor, Polyurathan-Schaum oder geeigneten Verbundstoffen als geeignet erwiesen. In Fig. 1b nicht dargestellt sind die Ränder des formstabilen flächigen Trägers 10 bevorzugt mit Verbindungselementen versehen, so dass diese Verbindungselemente eine Verknüpfung zwischen zwei formstabilen flächigen Trägern 10 ermöglichen. Insbesondere handelt es sich bei den Verbindungselementen um miteinander kooperierende Nut-und-Feder-Elemente. An der der Trägerfolie 9 abgewandten Seite des formstabilen, flächigen Trägers 10 kann eine in Fig. 1b nicht gezeigte Abdeckfolie angeordnet sein, die bevorzugt wasserabweisend ausgeführt sein kann. Dadurch kann effektiv verhindert werden, dass Leckagewasser oder Feuchtigkeit in den Boden des Raums gelangt.

Fig. 1b zeigt die Vergrößerung der Auflagefläche des erfindungsgemäßen flexiblen Kunststoffrohrs 1 auf der Trägerfolie 9: Beim seiner Verlegung wird das flexible Kunststoffrohr 1 auf die Trägerfolie 9 aufgelegt, so dass das flexible Kunststoffrohr 1 zunächst nur im Scheitelbereich punktuell auf der Trägerfolie 9 aufliegt. Wird nun auf das flexible Kunststoffrohr 1 von oben ein Druck ausgeübt, gibt die flexible elastische Ummantelung nach und passt sich der Oberfläche der Trägerfolie 9 an. Damit liegt das erste Element 5 nun flächig auf dem zweiten Element 11 auf der Trägerfolie 9 auf, so dass eine stärkere Klettverbindung 6 ausgebildet wird, die nach Wegfall des ausgeübten Drucks im Wesentlichen bestehen bleibt.

Zum Verlegen eines als Fußbodenheizung ausgebildeten erfindungsgemäßen Flächentemperierungselements 8 wird der mit der Trägerfolie 9 versehene formstabile, flächige Träger 10 auf dem ggf. mit einer Dämmung ausgelegten Boden vollflächig ggf. nach vorherigem Zuschneiden ausgelegt. Die Dämmung kann dabei als thermische Dämmung und/oder als Trittschalldämmung fungieren. Typische Dämmmaterialien zu diesem Zweck beinhalten geschäumte Kunststoffe (Polystyrol, Neopor, Polyurethan), geschäumte Elastomere (Kautschuk, Neopren oder ähnliches), anorganische Dämmmaterialien (Steinwolle, Glaswolle oder dergleichen) oder Naturdämmstoffe (Holzfaser, Holzwolle und dergleichen). Daraufhin wird das flexible Kunststoffrohr 1 im gewünschten Muster auf der Trägerfolie 9 verlegt und angedrückt, so dass eine Klettverbindung 6 mit vergrößerter Auflagefläche ausgebildet wird. Zur Korrektur des Verlegemusters kann die reversibel ausgebildete Klettverbindung 6 durch Anheben des flexiblen Kunststoffrohrs 1 gelöst werden, wonach dieses erneut verlegt werden kann. Abschließend wird die Anordnung mit Estrich vergossen.

In Fig. 2a ist eine weitere Ausführungsform eines flexiblen Kunststoffrohres 1 in einer Querschnittsdarstellung gezeigt. Das flexible Kunststoffrohr 1 umfasst eine erste Schicht 2 aus polymerem Material, die ein Lumen 3 zu Führung eines Wärmeträgermediums umgibt. In der in Fig.1 a dargestellten Ausführungsform ist die erste Schicht 2 aus einem Polyethylen mit erhöhter Temperaturbeständigkeit gemäß ISO 24033 (PE-RT), um das herum in der angegeben Reihenfolge eine Haftvermittlerschicht und eine Diffusionssperrschicht angeordnet sind. Bevorzugt ist die erste Schicht 2 sauerstoffdicht gemäß DIN 4726. Um die Außenseite der ersten Schicht 2 ist ggf. über eine Haftvermittlerschicht oder eine Klebstoffschicht eine flexible elastische Ummantelung 7 aus geschäumtem Polymermaterial, insbesondere aus geschäumten Polyethylen, angeordnet. Die flexible elastische Ummantelung 7 ummantelt die erste Schicht 2 somit vollständig. Die erste Schicht 2 und die flexible elastische Ummantelung 7 werden vorzugsweise in einem Arbeitsgang mittels Coextrusion hergestellt.

Die Außenseite des flexiblen Kunststoffrohres 1 bildet eine zweite Schicht 4, die in der in der in Fig. 2a dargestellten Ausführungsformform des flexiblen Kunststoffrohres 1 wiederum in Form von Bändern ausgebildet ist, die in Form von im Wesentlichen parallel zueinander verlaufenden Spiralen um die erste Schicht 2 angeordnet sind. An der Außenseite des flexiblen Kunststoffrohrs 1 abgewandten Seite der zweiten Schicht 4 befinden sich unregelmäßig über die Oberfläche der ersten Schicht 2 verteilte Haken, die ein erstes Element 5 einer Klettverbindung 6 (vgl. Fig. 2b) bilden. Alternativ oder zusätzlich dazu kann das erste Element 5 der Klettverbindung 6 auch durch Schlingen, Fasern oder ähnliches umfassen. Ebenso kann das erste Element 5 der Klettverbindung 6 auch als Vlies, Gewirke, Veloursgewebe oder als Plüsch-, Frottee- oder sonstiges textiles Flächengebilde ausgebildet sein. An der den Haken abgewandten Seite ist die zweite Schicht 4 über eine Klebstoffverbindung an der flexiblen elastischen Ummantelung 7 befestigt.

In Fig. 2b ist eine Ausführungsform eines Flächentemperierungssystems 8 gemäß der vorliegenden Erfindung mit dem in Fig. 2a dargestellten flexiblen Kunststoffrohr 1 in einer Querschnittsdarstellung gezeigt. Das flexible Kunststoffrohr 1 ist darin auf einer Trägerfolie 9 angeordnet, die über eine Klebstoffschicht flächig auf einen formstabilen flächigen Träger 10 aufgebracht ist. Die dem formstabilen flächigen Träger 10 abgewandte Seite der Trägerfolie 9 ist dabei wiederum als Vlies ausgebildet, das ein zweites Element 11 einer Klettverbindung 6 bildet. Ebenso kann das zweite Element 11 der Klettverbindung 6 auch durch Haken, Schlingen und/oder Fasern gebildet sein, während das erste Element 5 als Vlies, Gewirke, Veloursgewebe oder dergleichen ausgestaltet ist.

Da die Trägerfolie 9 vollflächig mit dem Vlies versehen ist, kann das flexible Kunststoffrohr 1 an beliebigen Stellen der Trägerfolie 9 lösbar befestigt werden. Der formstabile flächige Träger 10 in der in Fig. 2b gezeigten Ausführungsform vorzugsweise so stabil ausgeführt, dass er für die Verlegung des flexiblen Kunststoffrohrs 1 als Bestandteil eines als Fußbodenheizung ausgebildeten erfindungsgemäßen Flächentemperierungssystems 8 geeignet ist.

Fig. 2b zeigt die Vergrößerung der Auflagefläche des flexiblen Kunststoffrohrs 1 auf der Trägerfolie 9: Beim seiner Verlegung wird das dargestellte flexible Kunststoffrohr 1 auf die Trägerfolie 9 aufgelegt, so dass das flexible Kunststoffrohr 1 zunächst nur im Scheitelbereich punktuell auf der Trägerfolie 9 aufliegt. Wird nun auf das flexible Kunststoffrohr 1 von oben ein Druck ausgeübt, gibt die flexible elastische Ummantelung 7 nach und passt sich auch in dieser Ausführungsform der Oberfläche der Trägerfolie 9 an. Damit liegt das erste Element 5 nunmehr flächig auf dem zweiten Element 11 auf der Trägerfolie 9 auf, so dass eine stär-

## Patentansprüche

1. Flächentemperierungssystem, umfassend:
- mindestens ein flexibles Kunststoffrohr (1), das eine erste Schicht (2) aus polymerem Material, die ein Lumen (3) des Kunststoffrohres (1) umgibt, und eine zweite, die Außenseite des Kunststoffrohres (1) bildende Schicht (4) umfasst, die die erste Schicht (2) zumindest teilweise ummantelt und ein erstes Element (5) einer Klettverbindung (6) umfasst, zur Führung eines Wärmeträgermediums;
- eine Trägerfolie (9), wobei zumindest an einer Seite der Trägerfolie (9) ein zweites Element (11) der Klettverbindung (6) angeordnet ist, so dass das/die flexible(n) Kunststoffrohr(e) (1) lösbar unter Bildung der Klettverbindung (6) an der Trägerfolie (9) festlegbar sind; und
- einen formstabilen, flächigen Träger (10), auf dessen einer Seite die Trägerfolie (9) angeordnet ist,
**dadurch gekennzeichnet, dass**
zwischen der ersten Schicht (2) und der zweiten Schicht (4) eine flexible, elastische Ummantelung (7) angeordnet ist.

2. Flächentemperierungssystem nach Anspruch 1, **dadurch gekennzeichnet, dass** der formstabile, flächige Träger (10) an seiner der Trägerfolie (11) abgewandten Seite mit einer Abdeckfolie verbunden ist.

3. Flächentemperierungssystem nach Anspruch 1 oder Anspruch 2, **dadurch gekennzeichnet, dass** die zweite Schicht (3) spiralförmig oder doppelspiralförmig an der Außenseite des flexiblen Kunststoffrohrs (1) angeordnet ist.

4. Flächentemperierungssystem nach einem der Ansprüche 1 bis 3, **dadurch gekennzeichnet, dass** die flexible, elastische Ummantelung (7) die erste Schicht (2) teilweise ummantelt.

5. Flächentemperierungssystem nach Anspruch 4, **dadurch gekennzeichnet, dass** die flexible, elastische Ummantelung (7) an der der ersten Schicht (2) zugewandten Seite der zweiten Schicht (4) angeordnet ist und dem Verlauf der zweiten Schicht (4) an der Außenseite des flexiblen Kunststoffrohrs (1) folgt.

6. Flächentemperierungssystem nach Anspruch 1 oder Anspruch 3, **dadurch gekennzeichnet, dass** die flexible, elastische Ummantelung (7) die erste Schicht (2) vollständig ummantelt.

7. Flächentemperierungssystem nach einem der vorhergehenden Ansprüche 1 bis 6, **dadurch gekennzeichnet, dass** die flexible, elastische Ummantelung (7) über eine Klebstoffschicht mit der ersten Schicht (2) und/oder mit der zweiten Schicht (4) verbunden ist.

## Claims

1. Surface temperature controlling system, comprising:
- at least one flexible plastic pipe (1), which includes a first layer (2) of polymeric material that surrounds a lumen (3) of the plastic pipe (1), and a second layer (4) forming the outer side of the plastic pipe (1), which at least partially sheaths the first layer (2) and includes a first element (5) of a hook and loop connection (6), to guide a heat carrier medium;
- a carrier film (9), wherein a second element (11) of the hook-and-loop connection (6) is arranged at least at one side of the carrier film (9), so that the flexible plastic pipe(s) (1) can be releasably secured to the carrier film (9) under the formation of a hook-and-loop connection (6); and
- a dimensionally-stable, flat carrier (10), on the one side of which the carrier film (9) is arranged,
**characterized in that**
a flexible, elastic sheathing (7) is arranged between the first layer (2) and the second layer (4).

2. Surface temperature controlling system according to claim 1, **characterized in that** the dimensionally-stable flat carrier (10) is connected with a cover film on its side facing away from the carrier film (11).

3. Surface temperature controlling system according to claim 1 or claim 2, **characterized in that** the second layer (3) is arranged spirally or double-spirally on the outer side of the flexible plastic pipe (1).

4. Surface temperature controlling system according to any one of claims 1 to 3, **characterized in that** the flexible elastic sheathing (7) at least partially sheathes the first layer (2).

5. Surface temperature controlling system according to claim 4, **characterized in that** the flexible elastic sheathing (7) is arranged at the side of the second layer (4) facing the first layer (2) and follows the course of the second layer (4) at the outer side of the flexible plastic pipe (1).

6. Surface temperature controlling system according to claim 1 or claim 3, **characterized in that** the flexible elastic sheathing (7) sheathes the first layer (2) entirely.

7. Surface temperature controlling system according to any one of the preceding claims 1 to 6, **characterized in that** the flexible elastic sheathing (7) is connected to the first layer (2) and/or to the second layer (4) via an adhesive layer.

## Revendications

1. Système de thermorégulation de surfaces, comprenant :
- au moins un tuyau en matière plastique (1) flexible, qui comprend une première couche (2) composée d'un matériau polymère, qui entoure un lumen (3) du tuyau en matière plastique (1), et une deuxième couche (4) formant le côté extérieur du tuyau en matière plastique (1), qui enveloppe au moins en partie la première couche (2) et comprend un premier élément (5) d'un système de liaison agrippante (6), servant à guider un milieu caloporteur ;
- un film de support (9), dans lequel un deuxième élément (11) du système de liaison agrippante (6) est disposé au moins au niveau d'un côté du film de support (9) de sorte que le/les tuyau/tuyaux en matière plastique (1) flexible/flexibles peut/peuvent être fixé/fixés de manière amovible en formant le système de liaison agrippante (6) au niveau du film de support (9) ; et
- un support (10) plat de forme stable, sur un côté duquel est disposé le film de support (9),
**caractérisé en ce que**
une enveloppe (7) élastique flexible est disposée entre la première couche (2) et la deuxième couche (4).

2. Système de thermorégulation de surfaces selon la revendication 1, **caractérisé en ce que** le support (10) plat de forme stable est relié à un film de recouvrement au niveau de son côté opposé au film de support (11).

3. Système de thermorégulation de surfaces selon la revendication 1 ou la revendication 2, **caractérisé en ce que** la deuxième couche (3) est disposée en forme de spirale ou en forme de double spirale au niveau du côté extérieur du tuyau en matière plastique (1) flexible.

4. Système de thermorégulation de surfaces selon l'une quelconque des revendications 1 à 3, **caractérisé en ce que** l'enveloppe (7) élastique flexible enveloppe en partie la première couche (2).

5. Système de thermorégulation de surfaces selon la revendication 4, **caractérisé en ce que** l'enveloppe (7) élastique flexible est disposée au niveau du côté, tourné vers la première couche (2), de la deuxième couche (4) et suit le profil de la deuxième couche (4) au niveau du côté extérieur du tuyau en matière plastique (1) flexible.

6. Système de thermorégulation de surfaces selon la revendication 1 ou la revendication 3, **caractérisé en ce que** l'enveloppe (7) élastique flexible enveloppe en totalité la première couche (2).

7. Système de thermorégulation de surfaces selon l'une quelconque des revendications précédentes 1 à 6, **caractérisé en ce que** l'enveloppe (7) élastique flexible est reliée par l'intermédiaire d'une couche de colle à la première couche (2) et/ou à la deuxième couche (4).
